# EUROPEAN PATENT APPLICATION

(11) **EP 4 661 256 A1**
(43) Date of publication of application: **10.12.2025**
(21) Application number: 25175711.8
(22) Date of filing: 12.05.2025
(51) Int. Cl.: H02K 7/00

(54) **ACTUATOR**

(30) Priority: 05.06.2024 JP 2024091601
(71) Applicant: Sumitomo Heavy Industries, Ltd., Tokyo 141-6025 (JP)
(72) Inventor: FUKASAWA, Toshiki, Kanagawa, 237-8555, (JP)
(74) Representative: Louis Pöhlau Lohrentz

(57) **Abstract**

Provided is an actuator (10) that can achieve weight saving of a shaft body configured by a motor shaft (12) and an input shaft (16). An actuator (10) includes a motor (14) including a motor shaft (12), and a speed reducer (18) including an input shaft (16) to which rotation of the motor shaft (12) is input, in which the input shaft (16) is a separate body from the motor shaft (12) and is connected to the motor shaft (12) in an integrally rotatable manner by a connection member (46), and the motor shaft (12) has a smaller specific gravity than the input shaft (16). The input shaft (16) may be formed of an iron-based material, and the motor shaft (12) may be formed of a light metal-based material.

## Description

### BACKGROUND OF THE INVENTION

### Field of the Invention

The present disclosure relates to an actuator.

### Description of Related Art

Japanese Unexamined Patent Publication No. 2022-142033 discloses an actuator including a motor including a motor shaft and a speed reducer including an input shaft to which rotation of the motor shaft is input. The motor shaft and the input shaft of the actuator constitute an integrally rotatable shaft body.

### SUMMARY OF THE INVENTION

The shaft body of Japanese Unexamined Patent Publication No. 2022-142033 is a monocoque structure in which the motor shaft and the input shaft are integrally formed. The present inventor has recognized that there is room for improvement in weight saving such a shaft body.

An object of the present disclosure is to provide an actuator that can achieve weight saving of a shaft body configured by a motor shaft and an input shaft.

The present disclosure relates to an actuator including: a motor including a motor shaft; and a speed reducer including an input shaft to which rotation of the motor shaft is input, in which the input shaft is a separate body from the motor shaft and is connected to the motor shaft in an integrally rotatable manner by a connection member, and the motor shaft has a smaller specific gravity than the input shaft.

According to the present disclosure, it is possible to provide the actuator that can achieve weight saving of the shaft body configured by the motor shaft and the input shaft.

### BRIEF DESCRIPTION OF THE DRAWINGS

Fig. 1 is a side cross-sectional view showing an actuator according to a first embodiment.
Fig. 2 is a side cross-sectional view showing a part of a shaft body according to the first embodiment.
Fig. 3 is a side cross-sectional view showing a part of a shaft body of a second embodiment in an enlarged manner.

### DETAILED DESCRIPTION OF THE INVENTION

Hereinafter, embodiments for implementing an actuator according to the present disclosure will be described. The same or equivalent elements will be denoted by the same reference numerals and the duplicate description thereof will be omitted. In each drawing, the components are omitted, enlarged, or reduced as appropriate for convenience of description. The drawings need to be viewed in alignment with the orientation of the reference numerals.

(First Embodiment) An actuator 10 can drive a driven device (not shown) by outputting rotation. The driven device is, for example, at least a part of various machines such as (1) an industrial machine such as a machine tool and a construction machine, (2) a robot such as an industrial robot and a service robot, (3) a transport machine such as a conveyor, and (4) a vehicle. The actuator 10 is an integral actuator in which a motor casing 22 and a speed reducer casing 32 (to be described below) are integrated with each other.

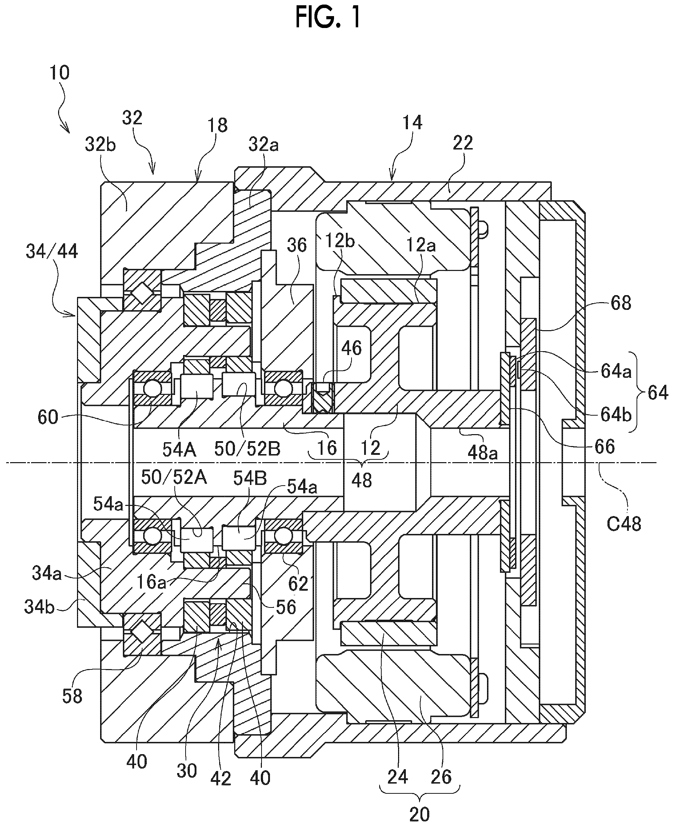

The actuator 10 includes a motor 14 including a motor shaft 12, and a speed reducer 18 including an input shaft 16 to which rotation of the motor shaft 12 is input. Hereinafter, a direction along a rotation center line C48 of a shaft body 48 configured by the motor shaft 12 and the input shaft 16 will be simply referred to as an axial direction, and a radius direction and a circumferential direction of a circle having the rotation center line C48 as a center will be simply referred to as a radial direction and a circumferential direction. In addition, a side (left side of a paper surface of Fig. 1) toward the speed reducer 18 from the motor 14 in the axial direction will be referred to as a load side, and a side opposite thereto (right side of the paper surface of Fig. 1) in the axial direction will be referred to as a counter load side.

The motor 14 includes a motor main body 20 that generates a rotating magnetic field, the above-described motor shaft 12 that rotates by the rotating magnetic field generated by the motor main body 20, and the motor casing 22 that accommodates the motor main body 20.

The motor main body 20 includes a motor rotor 24 and a stator 26 that cooperates with the motor rotor 24 to generate the rotating magnetic field. The motor rotor 24 is disposed in an outer peripheral portion of the motor shaft 12, and is provided in an integrally rotatable manner with the motor shaft 12 by, for example, press fitting, adhesion, and the like. A type of the motor rotor 24 is not particularly limited, and may be, for example, a permanent magnet type rotor, a cage type rotor, a winding type rotor, a coreless type rotor, and the like. The stator 26 is disposed in an inner peripheral portion of the motor casing 22, and is fixed to the motor casing 22 by, for example, press fitting or adhesion. A type of the stator 26 is not particularly limited, and may be, for example, a permanent magnet type stator, a winding type stator, a coreless type stator, and the like.

The motor shaft 12 includes a rotor disposition portion 12a in which the motor rotor 24 is disposed, and a rotor restricting portion 12b that restricts the axial movement of the motor rotor 24. The rotor restricting portion 12b according to the present embodiment is provided on the load side in the axial direction with respect to the motor rotor 24, and comes into contact with the motor rotor 24 to restrict the axial movement of the motor rotor 24. The motor casing 22 accommodates the motor shaft 12 in addition to the motor main body 20.

The speed reducer 18 includes the input shaft 16 to which the rotation output from the motor main body 20 is input via the motor shaft 12, a reduction mechanism 30 that reduces the rotation of the input shaft 16, a speed reducer casing 32 that accommodates at least a part of the reduction mechanism 30, a load-side cover 34 that is disposed on the load side in the axial direction with respect to the reduction mechanism 30, and a counter load-side cover 36 that is disposed on a counter-load side in the axial direction with respect to the reduction mechanism 30. The reduction mechanism 30 according to the present embodiment includes an external gear 40 and an internal gear 42 that mesh with each other. The reduction mechanism 30 according to the present embodiment is an eccentric oscillation type reduction mechanism that eccentrically oscillates the external gear 40 by eccentric bodies 52A and 52B to rotate one of the external gear 40 and the internal gear 42, and the axial rotation component thereof is extracted by the output member 44. The output member 44 extracts the rotation reduced by the reduction mechanism 30 and then outputs the extracted rotation to the driven device. The output member 44 according to the present embodiment is configured by the load-side cover 34.

The input shaft 16 is a separate body from the motor shaft 12. The input shaft 16 is connected to the motor shaft 12 in an integrally rotatable manner by a connection member 46. Details of the connection member 46 will be described below. The motor shaft 12 and the input shaft 16 constitute an integrally rotatable shaft body 48. The shaft body 48 according to the present embodiment includes a hollow portion 48a that penetrates the shaft body 48 in the axial direction.

The input shaft 16 includes an operating portion 50 that operates the reduction mechanism 30 when the input shaft 16 rotates. The operating portion 50 of the input shaft 16 is provided at a position that overlaps the reduction mechanism 30 in the radial direction. The operating portion 50 of the input shaft 16 used in the eccentric oscillation type reduction mechanism is configured by the eccentric bodies 52A and 52B. The eccentric bodies 52A and 52B have a circular shape eccentric to the rotation center line C48 of the shaft body 48. The input shaft 16 according to the present embodiment includes two eccentric bodies 52A and 52B, but the number of the eccentric bodies is not particularly limited and may be one or three or more. The eccentric bodies 52A and 52B according to the present embodiment include a load-side eccentric body 52A on the load side and a counter load-side eccentric body 52B on the counter-load side. Although not described here, in a case where the reduction mechanism 30 is a flexible meshing type reduction mechanism, the operating portion 50 of the input shaft 16 is configured by a wave generator that flexibly deforms a flexible gear.

The external gear 40 according to the present embodiment is provided to correspond to the eccentric bodies 52A and 52B, and is supported by the corresponding eccentric bodies 52A and 52B via eccentric bearings 54A and 54B. The internal gear 42 according to the present embodiment is provided in an inner peripheral portion of the speed reducer casing 32. A pin 56 penetrating the external gear 40 protrudes from the load-side cover 34 according to the present embodiment. The pin 56 directly or indirectly comes into contact with the external gear 40, and can synchronize the axial rotation component of the external gear 40 and the load-side cover 34 with each other.

The eccentric bearings 54A and 54B according to the present embodiment include a load-side eccentric bearing 54A corresponding to the load-side eccentric body 52A and a counter load-side eccentric bearing 54B corresponding to the counter load-side eccentric body 52B. The eccentric bearings 54A and 54B include a plurality of rolling elements 54a. The eccentric bearings 54A and 54B may include a holder that holds the plurality of rolling elements 54a. The eccentric bearings 54A and 54B according to the present embodiment do not include a dedicated outer ring and a dedicated inner ring, and the plurality of rolling elements roll on an inner peripheral portion of the external gear 40 and outer peripheral portions of the eccentric bodies 52A and 52B. In addition, the eccentric bearings 54A and 54B may include the dedicated outer ring and the dedicated inner ring. The input shaft 16 according to the present embodiment includes a bearing restricting portion 16a that restricts the axial movement of the eccentric bearings 54A and 54B. The bearing restricting portion 16a is provided between the eccentric bearings 54A and 54B adjacent to each other in the axial direction. The bearing restricting portion 16a restricts the axial movement of the load-side eccentric bearing 54A by coming into contact with the load-side eccentric bearing 54A from the counter-load side, and restricts the axial movement of the counter load-side eccentric bearing 54B by coming into contact with the counter load-side eccentric bearing 54B from the load side.

The speed reducer casing 32 is disposed on the load side with respect to the motor casing 22. The speed reducer casing 32 is connected to the motor casing 22 by a screw member (not shown) and the like. The speed reducer casing 32 accommodates the input shaft 16, the load-side cover 34, and a main bearing 58 (to be described below) in addition to at least a part (here, the external gear 40) of the reduction mechanism 30. The speed reducer casing 32 according to the present embodiment includes a first casing member 32a and a second casing member 32b provided on the load side with respect to the first casing member 32a. The casing members 32a and 32b are connected to each other by a screw member (not shown) and the like.

The load-side cover 34 according to the present embodiment includes a first load-side cover member 34a and a second load-side cover member 34b provided on the load side with respect to the first load-side cover member 34a. The cover members 34a and 34b are connected to each other by a screw member (not shown) and the like. The main bearing 58 that supports the output member 44 is disposed between the speed reducer casing 32 and the load-side cover 34. A load-side support bearing 60 that supports the input shaft 16 is disposed between the load-side cover 34 and the input shaft 16.

The counter load-side cover 36 is connected to the speed reducer casing 32 by a screw member (not shown) and the like. A counter load-side support bearing 62 that supports the input shaft 16 is disposed between the counter load-side cover 36 and the input shaft 16.

The actuator 10 includes an encoder 64 disposed on the counter-load side with respect to the motor main body 20 as an optional configuration. The encoder 64 includes an encoder disk 64a fixed to the shaft body 48 via a circuit board 66 and an encoder sensor 64b fixed to the motor casing 22 via a circuit board 68. The encoder sensor 64b detects the rotation of the shaft body 48 by detecting a change in a predetermined physical quantity (magnetic field, light amount, or the like) when the encoder disk 64a rotates together with the shaft body 48.

Here, the motor shaft 12 has a smaller specific gravity than the input shaft 16. The specific gravity described herein refers to a ratio of a density of a reference substance (water at 4°C) to a density of a subject to be referred to. In addition, the input shaft 16 has a higher Young's modulus (N/mm²) and a higher tensile strength (N/mm²) than the motor shaft 12. The conditions regarding the specific gravity, the Young's modulus, and the tensile strength described herein refer to the conditions regarding the materials of the two described elements. For example, in terms of the condition regarding the specific gravity, the material forming the motor shaft 12 has a smaller specific gravity than the material forming the input shaft 16. The conditions regarding the specific gravity and the like of the motor shaft 12 and the input shaft 16 listed here are referred to as first material conditions.

Specific examples of the materials of the input shaft 16 and the motor shaft 12 for satisfying the first material conditions are not particularly limited. In order to satisfy the first material conditions, for example, the input shaft 16 may be formed of an iron-based material, and the motor shaft 12 may be formed of a light metal-based material having a smaller specific gravity than the iron-based material. The term "-based material" described herein is a material including the material referred to as a main material. In a case where the material is a metal such as the iron-based material, an alloy of the metal may be used as the main material. The iron-based material contains, for example, iron such as steel or cast iron as the main material. In addition, the light metal-based material contains, for example, a light metal such as aluminum or titanium as the main material. Both the iron-based material and the light metal-based material may be formed of only the main material or may be formed of a composite material of the main material and another material. The composite material described herein refers to, for example, a fiber reinforced metal.

Normally, the iron-based material has a higher Young's modulus and a higher tensile strength than the light metal-based material, and the light metal-based material has a smaller specific gravity than the iron-based material. Therefore, the input shaft 16 is formed of the iron-based material, and the motor shaft 12 is formed of the light metal-based material, so that the first material conditions can be easily satisfied. In addition, in order to satisfy the above-described first material conditions, the input shaft 16 may be formed of a metal-based material, and the motor shaft 12 may be formed of a resin-based material. The metal-based material described herein includes the iron-based material and the light metal-based material.

The motor shaft 12 has a smaller specific gravity than the output member 44, and the output member 44 has a higher Young's modulus and a higher tensile strength than the motor shaft 12. The conditions regarding the specific gravity and the like of the output member 44 and the motor shaft 12 will be referred to as second material conditions. Specific examples of the material of the motor shaft 12 and the output member 44 for satisfying the second material conditions are also not particularly limited. For example, in order to satisfy the second material conditions, the output member 44 may be formed of the iron-based material, and the motor shaft 12 may be formed of the light metal-based material. In addition, in order to satisfy the second material conditions, the output member 44 may be formed of the metal-based material, and the motor shaft 12 may be formed of the resin-based material.

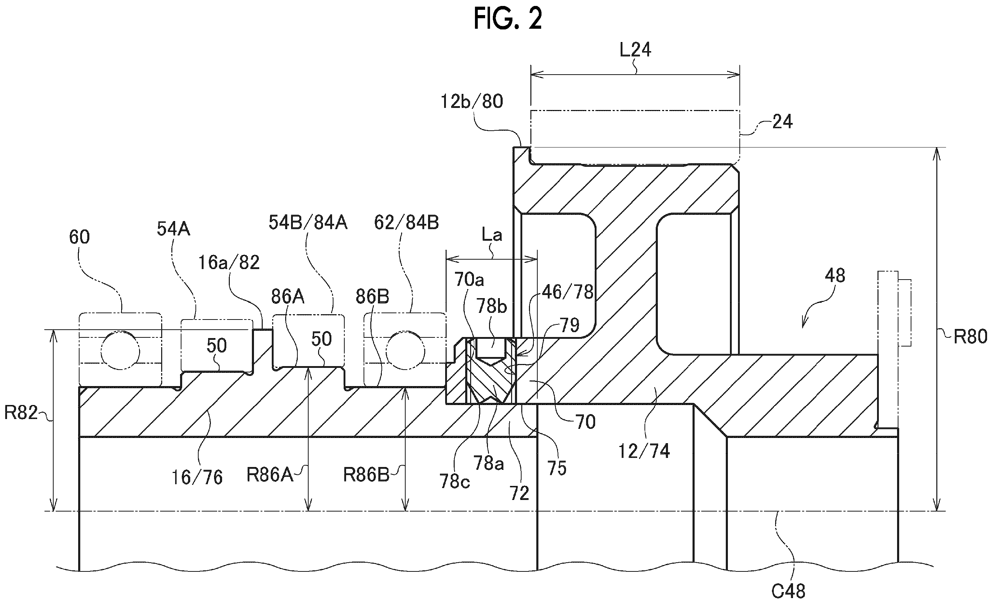

Fig. 2 will be referred to. One of the motor shaft 12 and the input shaft 16 includes an outer fitting portion 70, and the other of the motor shaft 12 and the input shaft 16 includes an inner fitting portion 72 that is spigot-fitted with the outer fitting portion 70. The spigot-fitting described herein refers to a structure in which the inner fitting portion 72 is fitted with the outer fitting portion 70. In the present embodiment, the motor shaft 12 includes the outer fitting portion 70, and the input shaft 16 includes the inner fitting portion 72. The outer fitting portion 70 has a tubular shape, and the inner fitting portion 72 is provided at a position that overlaps the outer fitting portion 70 in the radial direction. Hereinafter, a shaft including the outer fitting portion 70 out of the motor shaft 12 and the input shaft 16 will be referred to as an outer shaft 74, and a shaft including the inner fitting portion 72 will be referred to as an inner shaft 76. In the present embodiment, the motor shaft 12 is the outer shaft 74, and the input shaft 16 is the inner shaft 76, but the motor shaft 12 may be the inner shaft 76, and the input shaft 16 may be the outer shaft 74.

A fitting hole 75 is formed inside the outer fitting portion 70. The inner fitting portion 72 is inserted into the fitting hole 75 in the outer fitting portion 70 in the axial direction, and is spigot-fitted with the outer fitting portion 70. The inner fitting portion 72 may be spigot-fitted with the outer fitting portion 70 by clearance fitting or interference fitting. Accordingly, workability when the inner fitting portion 72 is inserted into the outer fitting portion 70 is improved as compared with a case where the outer fitting portion 70 and the inner fitting portion 72 are spigot-fitted with each other by press fitting. In addition, the inner fitting portion 72 may be spigot-fitted with the outer fitting portion 70 by press fitting. A cross-sectional shape of an inner peripheral portion of the outer fitting portion 70 perpendicular to the axial direction is, for example, a circular shape, a polygonal shape, and the like. A cross-sectional shape of an outer peripheral portion of the inner fitting portion 72 perpendicular to the axial direction may be a circular shape, a polygonal shape, or the like that can be fitted into the outer fitting portion 70.

The outer fitting portion 70 and the inner fitting portion 72 according to the present embodiment are spigot-fitted with each other without using spline coupling. Therefore, for the spline coupling, it is not necessary to form a female spline in the inner peripheral portion of the outer fitting portion 70 and a male spline in the outer peripheral portion of the inner fitting portion 72, and the structures of the outer fitting portion 70 and the inner fitting portion 72 can be simplified. An axial length La in which the outer fitting portion 70 and the inner fitting portion 72 overlap each other when viewed in the radial direction will be examined. For example, the axial length La may be shorter than an axial length L24 of the motor rotor 24.

The connection member 46 is configured by a fastening member 78 that fastens the input shaft 16 and the motor shaft 12 in the radial direction. The fastening member 78 fastens each of the fitting portions 72 and 74 of the motor shaft 12 and the input shaft 16 in the radial direction. The fastening member 78 includes a shaft portion 78a extending in the radial direction. The phrase "fastens in the radial direction" described herein means to connect portions of the input shaft 16 and the motor shaft 12 that are aligned in the radial direction, by using the fastening member 78 including the shaft portion 78a extending in the radial direction. A male screw portion is formed in the shaft portion 78a according to the present embodiment. An example will be described in which the fastening member 78 in the present embodiment is formed of a stop screw (grub screw), but the present disclosure is not limited thereto, and a headed screw, a bolt, or the like may be adopted. In a case where these components are used as the fastening member 78, the input shaft 16 and the motor shaft 12 are fastened by screw fastening. In addition, the fastening member 78 may be a rivet such as a blind rivet.

The fastening member 78 serving as the stop screw does not include head portions on both sides of the shaft portion 78a in the axial direction. A tool hole 78b for inserting a tool for rotating the fastening member 78 is provided in an outer end portion of the shaft portion 78a on a radially outer side. A pressing portion 78c such as a recessed tip is provided at an inner end portion of the shaft portion 78a of the fastening member 78 serving as the stop screw, which is located on a radially inner side. An outer fastening hole 70a into which the shaft portion 78a of the fastening member 78 is inserted is formed in the outer fitting portion 70. A female screw portion 79 into which the shaft portion 78a of the fastening member 78 is screwed is provided in the outer fastening hole 70a according to the present embodiment. The fastening member 78 serving as the stop screw is fastened to the female screw portion 79, so that the pressing portion 78c is pressed against the outer peripheral portion of the inner fitting portion 72, and thus the motor shaft 12 and the input shaft 16 are fastened to each other. Here, only one fastening member 78 is shown, but a plurality of fastening members 78 may be provided at intervals in the circumferential direction. In a case where the stop screw is used, the cross-sectional shape of the inner fitting portion 72 perpendicular to the axial direction may be, for example, a simple circular cylindrical shape and the like.

The effects of the above-described actuator 10 will be described.

The motor shaft 12 is has a smaller specific gravity than the input shaft 16. Accordingly, weight saving of the shaft body 48 can be achieved as compared with a case where the motor shaft 12 and the input shaft 16 have the same specific gravity.

For example, a configuration will be considered in which the shaft body 48 has a monocoque structure in which the motor shaft 12 and the input shaft 16 are integrally formed. In this case, a case will be examined in which a plurality of annular components such as the motor rotor 24 and the support bearings 60 and 62 are assembled to the shaft body 48. In this case, the method of assembling the annular components into the shaft body 48 is limited to the following two methods.
(A1) The annular components are disposed on the counter-load side of the shaft body 48, and the annular components are assembled by relatively moving the annular components to the load side with respect to the shaft body 48.
(A2) The annular components are disposed on the load side of the shaft body 48, and the annular components are assembled by relatively moving the annular components to the counter-load side with respect to the shaft body 48.

For this reason, an outer shape of the entire shaft body 48 is limited to an outer shape that satisfies any one of a first outer shape condition in which an outer diameter gradually increases from a small outer diameter portion on one end side in the axial direction to a maximum outer diameter portion on the other end side, and a second outer shape condition in which the outer diameter gradually increases from the small outer diameter portions on both end sides in the axial direction to the maximum outer diameter portion on the center side. Therefore, an outer diameter of the maximum outer diameter portion of the shaft body 48 is likely to increase, and a surplus portion is likely to be generated in the shaft body 48. In a case where the hollow portion 48a is formed in the shaft body 48, a dead space is likely to be generated in the hollow portion 48a.

In contrast, the actuator 10 according to the present embodiment includes the motor shaft 12 and the input shaft 16 as separate bodies, and the motor shaft 12 and the input shaft 16 are connected to each other in an integrally rotatable manner by the connection member 46. Therefore, in addition to the following (B1) and (B2), the annular components can also be assembled to the motor shaft 12 or the input shaft 16 by using the following methods (B3) and (B4). It is assumed that (B1) to (B4) described below are all performed in a state where the motor shaft 12 and the input shaft 16 are separated from each other.
(B1) The annular components are disposed on the counter-load side of the motor shaft 12, and the annular components are assembled by relatively moving the annular components to the load side with respect to the motor shaft 12.
(B2) The annular components are disposed on the load side of the input shaft 16, and the annular components are assembled by moving the annular components to the counter-load side with respect to the input shaft 16.
(B3) The annular components are disposed on the load side of the motor shaft 12, and the annular components are assembled by moving the annular component to the counter-load side with respect to the motor shaft 12.
(B4) The annular components are disposed on the counter-load side of the input shaft 16, and the annular components are assembled by moving the annular components to the load side with respect to the input shaft 16.

For this reason, in a case where the motor shaft 12 and the input shaft 16 are separate bodies, the outer shape of the entire shaft body 48 is not limited to the outer shape satisfying of the above-described first outer shape condition or second outer shape condition, and the degree of freedom in the outer shape can be increased. For example, in order to allow the plurality of annular components to be attached to the motor shaft 12 and the input shaft 16, each of the motor shaft 12 and the input shaft 16 need only have the outer shape satisfying the first outer shape condition or the second outer shape condition. Therefore, the outer diameter of the maximum outer diameter portion of the shaft body 48 is likely to be decreased as compared with the monocoque structure. Accordingly, as compared with the shaft body 48 having the monocoque structure described above, the surplus portion is less likely to be generated in the shaft body 48, which is advantageous in terms of weight saving and cost saving of the shaft body 48. In addition, in a case where the hollow portion 48a is formed in the shaft body 48, it is also advantageous in that a dead space is less likely to be generated in the hollow portion 48a.

In this way, the surplus portion is less likely to be generated in the shaft body 48, and thus the degree of freedom in the outer diameter of various components disposed around the shaft body 48 is also increased. The components described herein refer to, for example, various components of the motor 14 (motor rotor 24, stator 26, and the like), various components of the speed reducer 18 (reduction mechanism 30, support bearings 60 and 62, and the like), the encoder 64, the brake, and the like. As a result, there is also an advantage in that it is easy to select a component having an appropriate outer diameter depending on the ability to be exhibited as the actuator 10. In particular, in a case where the component is selected from a finished product, there is also a limitation on the outer diameter of the component that can be selected, and thus the performance and the weight are likely to be excessive. In this regard, it is easy to select a component having an appropriate outer diameter, which is advantageous in terms of the cost saving and weight saving.

The input shaft 16 is connected to the motor shaft 12 in an integrally rotatable manner by a connection member 46. Therefore, in a stage before the input shaft 16 and the motor shaft 12 are connected to each other by the connection member 46, the input shaft 16 and the motor shaft 12 can be handled as independent individual components. As a result, the inspection and the performance evaluation can be easily performed on only the input shaft 16 or only the motor shaft 12.

The input shaft 16 is required to have a corresponding stiffness and tensile strength in order to function to transmit torque to other machine elements (eccentric bearings 54A and 54B) with sliding contact or rolling contact in the operating portion 50 that operates the reduction mechanism 30. For example, in a case of the eccentric oscillation type speed reducer, the other mechanical elements described herein are eccentric bearings 54A and 54B. In addition, in a case of the flexible meshing type speed reducer, the other mechanical element described herein is, for example, a wave generator bearing disposed between the wave generator and the flexible gear.

In contrast, the stiffness and the tensile strength of the motor shaft 12 required for holding a holding target (motor rotor 24 or the like) by the motor shaft 12 are relatively low as compared with the stiffness and tensile strength required for the input shaft 16. In general, when the specific gravity is decreased, the Young's modulus and the tensile strength are also decreased in many cases. In the present embodiment, the input shaft 16 having a high required stiffness and tensile strength is set to have a higher Young's modulus and a higher tensile strength than the motor shaft 12, and the motor shaft 12 having a low required stiffness and tensile strength is set to have a lower specific gravity than the input shaft 16. Therefore, even when the motor shaft 12 is made to have a smaller specific gravity of than the input shaft 16, the stiffness and tensile strength required for the motor shaft 12 can be easily ensured. Accordingly, it is advantageous to save the weight of the shaft body 48 while ensuring the stiffness and tensile strength required for each of the input shaft 16 and the motor shaft 12.

The input shaft 16 is formed of the iron-based material, and the motor shaft 12 is formed of the light metal-based material. Accordingly, the material of the motor shaft 12 is made to have a smaller specific gravity than the material of the input shaft 16, and the material of the input shaft 16 is made to have a higher Young's modulus and a higher tensile strength than the material of the motor shaft 12. As described above, it is advantageous to save the weight of the shaft body 48 while ensuring the stiffness and tensile strength required for each of the input shaft 16 and the motor shaft 12. For example, in a case where the motor shaft 12 that is half of the shaft body 48 is formed of aluminum and the remaining input shaft 16 is formed of steel, the weight of the shaft body 48 can be saved by approximately 15% as compared with a case where both the motor shaft 12 and the input shaft 16 are formed of steel. In a case where the input shaft 16 is formed of the iron-based material and the motor shaft 12 is formed of the light metal-based material, the surface hardness of the operating portion 50 of the input shaft 16 is likely to be higher than the surface hardness of the outer peripheral surface of the motor shaft 12. Therefore, it is also advantageous to ensure the surface hardness required for the operating portion 50 of the input shaft 16.

The transmission torque required for the shaft body 48 that rotates at high speed is extremely smaller than the transmission torque required for the output member 44 that rotates at low speed. Accordingly, the stiffness and tensile strength required for the motor shaft 12 which is a part of the shaft body 48 are lower than the stiffness and tensile strength required for the output member 44. In the present embodiment, the output member 44 having a high required stiffness and tensile strength is made to have a higher Young's modulus and a higher tensile strength than the motor shaft 12, and the motor shaft 12 having a lower required stiffness and tensile strength is made to have a smaller specific gravity than the output member 44. Therefore, even when the motor shaft 12 is made to have a smaller specific gravity than the output member 44, the stiffness and tensile strength required for the motor shaft 12 can be easily ensured. Accordingly, it is advantageous to save the weight of the shaft body 48 while ensuring the stiffness and tensile strength required for each of the motor shaft 12 and the output member 44.

In a case where the motor shaft 12 and the input shaft 16 are fastened in the axial direction by the fastening member 78, the fastening will be referred to as axial fastening. The phrase "is fastened in the axial direction" described herein means that portions of a plurality of elements to be fastened that are aligned in the axial direction are connected by using the fastening member 78 including the shaft portion 78a extending in the axial direction. In a case where the axial fastening is used, it is necessary to ensure a portion in which the shaft portion 78a of the fastening member 78 passes through the motor shaft 12 and the input shaft 16 in the axial direction. In addition, in a case where the axial fastening is used, the axial length of the fastening member 78 is likely to be increased. Therefore, the surplus portion that causes an increase in the outer diameters of the motor shaft 12 and the input shaft 16 is likely to be generated in a wide range in the axial direction including the fastening member 78.

In this regard, according to the present embodiment, the motor shaft 12 and the input shaft 16 are fastened to each other in the radial direction by the fastening member 78. In a case where the fastening in the radial direction is used as described above, it is not necessary to ensure a portion in which the shaft portion 78a of the fastening member 78 passes through the motor shaft 12 and the input shaft 16 in the axial direction as in the axial fastening. In addition, in a case where the fastening in the radial direction is used, an axial dimension of the fastening member 78 is more likely to be shortened as compared with a case where the axial fastening is used. Therefore, as compared with a case where the axial fastening is used, the surplus portion that causes an increase in the outer diameters of the motor shaft 12 and the input shaft 16 is less likely to be generated in a wide axial range including the fastening member 78. As a result, it is advantageous to save the weight of the motor shaft 12 and the input shaft 16.

The input shaft 16 and the motor shaft 12 include the fitting portions 70 and 72 that are spigot-fitted with each other, respectively. Therefore, the inner fitting portion 72 is fitted with the outer fitting portion 70, so that the axial centers of the input shaft 16 and the motor shaft 12 can be easily aligned.

The fastening member 78 is configured by the stop screw, and is screwed into the female screw portion 79 of the outer fitting portion 70. Therefore, it is not necessary to provide the female screw portion 79 in the inner fitting portion 72, and thus it is advantageous to reduce the radial thickness of the inner fitting portion 72. Since the fastening member 78 serving as the stop screw does not have a head portion, the radial dimension of the fastening member 78 is advantageously reduced.

Next, other features of the actuator 10 will be described. The motor shaft 12 includes a first maximum outer diameter portion 80 having a maximum outer diameter in the motor shaft 12. The input shaft 16 includes a second maximum outer diameter portion 82 having a maximum outer diameter in the input shaft 16. In Fig. 2, an outer diameter R80 of the first maximum outer diameter portion 80 and an outer diameter R82 of the second maximum outer diameter portion 82 are shown. The first maximum outer diameter portion 80 according to the present embodiment is configured by the rotor restricting portion 12b of the motor shaft 12, but a specific example thereof is not particularly limited. The second maximum outer diameter portion 82 according to the present embodiment is configured by the bearing restricting portion 16a, but a specific example thereof is not particularly limited. In the present specification, the outer diameter of a part of the shaft body 48 refers to a radius of a circle circumscribing a point referring to the rotation center line C48 of the shaft body 48 as the center of the circle.

At least one of the motor shaft 12 and the input shaft 16 includes disposition portions 86A and 86B provided between the first maximum outer diameter portion 80 and the second maximum outer diameter portion 82 and in which annular components 84A and 84B are disposed. In the present embodiment, the input shaft 16 includes a first disposition portion 86A in which a first annular component 84A is disposed and a second disposition portion 86B in which a second annular component 84B is disposed.

The first annular component 84A is the counter load-side eccentric bearing 54B, and the second annular component 84B is the counter load-side support bearing **62.** The annular components 84A and 84B have an overall annular shape. A specific example of the second annular component 84B is not particularly limited, and may be a brake rotor, a motor rotor, an encoder disk, an oil seal, and the like. In the present embodiment, the counter load-side eccentric bearing 54B (rolling element) constituting the first annular component 84A is provided to be rollable in the first disposition portion 86A. In addition, in the present embodiment, the counter load-side support bearing 62 constituting the second annular component 84B is attached to the second disposition portion 86B by press fitting. The second annular component 84B may be provided to be rollable in the disposition portion 86B or may be attached by adhesion or the like.

The disposition portions 86A and 86B according to the present embodiment are provided at least on the input shaft 16. The disposition portions 86A and 86B may be provided on the motor shaft 12 in addition to the input shaft 16 or may be provided only on the motor shaft 12. The number of the disposition portions 86A and 86B is not particularly limited, and may be either one or a plurality. In a case where there are a plurality of disposition portions 86A and 86B, the types of the annular components 84A and 84B disposed in the individual disposition portions 86A and 86B may be different from each other or may be the same.

Outer diameters R86A and R86B of the disposition portions 86A and 86B are smaller than the outer diameter R80 of the first maximum outer diameter portion 80 of the motor shaft 12 and the outer diameter R82 of the second maximum outer diameter portion 82 of the input shaft 16. In the present embodiment, each of the outer diameter R86A of the first disposition portion 86A and the outer diameter R86B of the second disposition portion 86B satisfies this condition. In the present embodiment, the outer diameter R80 of the first maximum outer diameter portion 80 is larger than the outer diameter R82 of the second maximum outer diameter portion 82.

A case will be examined in which the shaft body 48 having the monocoque structure is provided with the disposition portions 86A and 86B in which the annular components 84A and 84B are disposed between the first maximum outer diameter portion 80 of the motor shaft 12 and the second maximum outer diameter portion 82 of the input shaft 16. In this case, as described above, the outer shape of the entire shaft body 48 is limited to the first outer shape condition and the second outer shape condition, so that it is necessary to increase or decrease the outer diameter in the order of the first maximum outer diameter portion 80 → the disposition portions 86A and 86B → the second maximum outer diameter portion 82. For this reason, it is necessary to make the outer diameters of the disposition portions 86A and 86B larger than the outer diameters of any of the first and second maximum outer diameter portions 80 and 82. Accordingly, the increase in the outer diameters of the annular components 84A and 84B disposed in the disposition portions 86A and 86B is caused.

In this regard, according to the present embodiment, as described above, the degree of freedom in the outer shape of the shaft body 48 can be increased. Therefore, the outer diameters R86A and R86B of the disposition portions 86A and 86B located between the first maximum outer diameter portion 80 and the second maximum outer diameter portion 82 can be made smaller than the outer diameters R80 and R82 of the first maximum outer diameter portion 80 and the second maximum outer diameter portion 82, respectively. Therefore, the outer diameters of the annular components 84A and 84B located between the first maximum outer diameter portion 80 and the second maximum outer diameter portion 82 are reduced as compared with the shaft body 48 having the monocoque structure. For this reason, the annular components 84A and 84B having an appropriate outer diameter depending on the ability to be exhibited as the actuator 10 are easily selected.

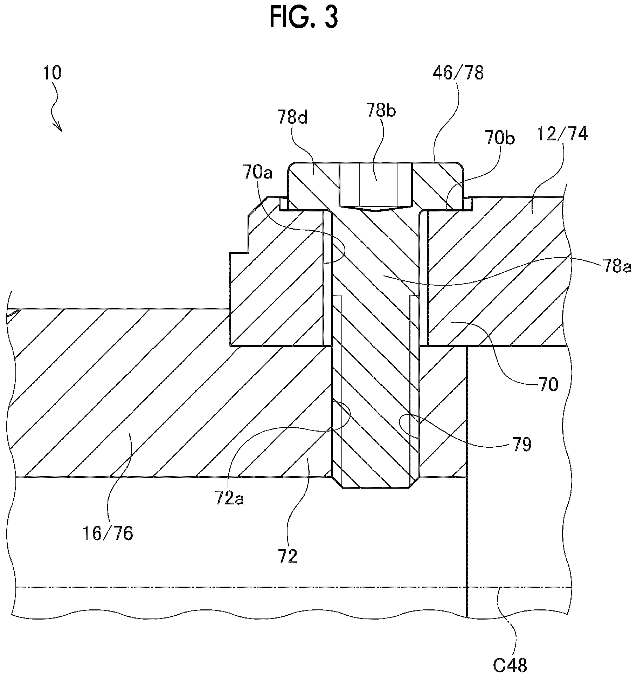

(Second Embodiment) Fig. 3 will be referred to. The actuator 10 according to the present embodiment is different from the first embodiment in a peripheral structure of the fastening member 78. Hereinafter, in the following embodiment, the same contents as those in the first embodiment may be applied to the components that are not described below among the components described in the first embodiment.

The fastening member 78 according to the present embodiment is configured by a headed screw including a head portion 78d at the outer end portion of the shaft portion 78a. As in the first embodiment, the head portion 78d of the fastening member 78 may be provided with the tool hole 78b such as a hexagonal hole. The outer fastening hole 70a of the outer fitting portion 70 is a non-threaded hole in which a female screw is not formed. An inner fastening hole 72a into which the shaft portion 78a of the fastening member 78 is inserted is formed in the inner fitting portion 72. The female screw portion 79 into which the shaft portion 78a of the fastening member 78 is screwed is formed in the inner fastening hole 72a. As described above, the female screw portion 79 may be formed in either the outer fitting portion 70 or the inner fitting portion 72. In the present embodiment, it is also possible to obtain the effects other than the effects related to the stop screw among the effects described above.

In a case where the female screw portion 79 is formed in the inner fitting portion 72 as in the present embodiment, the counterbore portion 70b in which the head portion 78d of the fastening member 78 is seated may be formed in an outer peripheral side end portion of the outer fastening hole 70a in the outer fitting portion 70. In this case, at least a part of the head portion 78d of the fastening member 78 need only be disposed in the counterbore portion 70b. In addition, a cross-sectional shape of the outer fitting portion 70 may be a polygonal cylindrical shape, and one surface portion of the outer peripheral surface thereof may be used as a seat surface of the head portion 78d of the fastening member 78.

In a case where the female screw portion 79 is formed in the inner fitting portion 72 as described above, the inner shaft 76 including the inner fitting portion 72 may have a higher Young's modulus and a higher tensile strength than the outer shaft 74. Accordingly, the fastening member 78 can be tightly fastened to the female screw portion 79 of the inner fitting portion 72, which is advantageous in ensuring the connection strength by the fastening member 78. In order to satisfy this condition, for example, the input shaft 16 serving as the inner shaft 76 may be formed of the iron-based material, and the motor shaft 12 serving as the outer shaft 74 may be formed of the light metal-based material.

Next, modification forms of the respective components described above will be described.

A specific example of the reduction mechanism 30 of the speed reducer 18 is not particularly limited. In addition to the eccentric oscillation type reduction mechanism, the reduction mechanism 30 may be a gear mechanism such as a simple planetary gear reduction mechanism, a flexible meshing type reduction mechanism (including a tubular type, a silk hat type, and a cup type), a perpendicular shaft gear reduction mechanism, and a parallel shaft gear reduction mechanism. The reduction mechanism 30 may be a friction transmission mechanism in addition to the gear mechanism. Although the center crank type in which the input shaft 16 is disposed on the rotation center line of the output member 44 has been described as the eccentric oscillation type reduction mechanism, a distribution type in which the input shaft 16 is disposed at a position offset from the rotation center line in the radial direction may be used. The output member 44 may be configured by the speed reducer casing 32, instead of the load-side cover 34.

In a case where the female screw portion 79 is formed in the outer fitting portion 70 as in the first embodiment, the outer shaft 74 including the outer fitting portion 70 may have a higher Young's modulus and a higher tensile strength than the inner shaft 76. Accordingly, the fastening member 78 can be tightly fastened to the female screw portion 79 of the outer fitting portion 70, which is advantageous in ensuring the connection strength by the fastening member 78.

The motor shaft 12 and the input shaft 16 need only satisfy at least the above-described condition regarding the specific gravity, and need not satisfy the conditions regarding the Young's modulus and the tensile strength. For example, the input shaft 16 may have a larger specific gravity than the motor shaft 12, and the input shaft 16 may have a lower Young's modulus and a lower tensile strength than the motor shaft 12. In addition, the motor shaft 12 and the output member 44 may have the same specific gravity or may have the same Young's modulus and tensile strength. Although an example in which each of the motor shaft 12 and the input shaft 16 is formed of a single member has been described, each of the motor shaft 12 and the input shaft 16 may be formed of a plurality of members.

A specific example of the connection member 46 is not particularly limited. The connection member 46 may be a coupling, instead of the fastening member 78. The input shaft 16 and the motor shaft 12 may be connected to each other without using the fitting portions 70 and 72. For example, a flange portion may be provided on each of the input shaft 16 and the motor shaft 12, and the flange portions may be abutted against each other and connected to each other by the connection member 46. In this case, the connection member 46 may be the fastening member 78 that fastens the motor shaft 12 and the input shaft 16 to each other in the axial direction.

The outer diameters of the disposition portions 86A and 86B provided between the first maximum outer diameter portion 80 of the motor shaft 12 and the second maximum outer diameter portion 82 of the input shaft 16 may be larger than the outer diameter of any one of the first maximum outer diameter portion 80 and the second maximum outer diameter portion 82. The relationship in size between the outer diameter of the first maximum outer diameter portion 80 and the outer diameter of the second maximum outer diameter portion 82 is not particularly limited. For example, the outer diameter of the second maximum outer diameter portion 82 may be larger than the outer diameter of the first maximum outer diameter portion 80.

The contents of each component described in the above-described embodiments and the like are merely examples. The technical idea abstracted from these contents should not be interpreted in a limited manner in the contents of the present specification. The contents of each component described in the embodiments or the like can be changed, added, deleted, or the like, and many changes in design can be made. The description is emphasized by adding the notation of "the present embodiment" and "the embodiment" to the contents in which such a change in design can be made. However, the change in design is allowed even when there is no notation in the contents. Hatching added to the cross section in the drawing does not limit a material of a hatched subject. Any combination of the above-described components is also valid. The components configured by a singular member in the description in the present specification may be configured by a plurality of members. Similarly, the component configured by a plurality of members may be configured by a single member.

### Brief Description of the Reference Symbols

- 10:: actuator
- 12:: motor shaft
- 14:: motor
- 16:: input shaft
- 18:: speed reducer
- 30:: reduction mechanism
- 44:: output member
- 46:: connection member
- 70:: outer fitting portion
- 72:: inner fitting portion
- 78:: fastening member
- 79:: female screw portion
- 80:: first maximum outer diameter portion
- 82:: second maximum outer diameter portion
- 84A, 84B:: annular component
- 86A, 86B:: disposition portion

## Claims

1. An actuator (10) comprising:
a motor (14) including a motor shaft (12); and
a speed reducer (18) including an input shaft (16) to which rotation of the motor shaft (12) is input,
wherein the input shaft (16) is a separate body from the motor shaft (12) and is connected to the motor shaft (12) in an integrally rotatable manner by a connection member (46), and
the motor shaft (12) has a smaller specific gravity than the input shaft (16).

2. The actuator (10) according to claim 1,
wherein the input shaft (16) has a higher Young's modulus (N/mm²) and a higher tensile strength (N/mm²) than the motor shaft (12).

3. The actuator (10) according to claim 1,
wherein the input shaft (16) is formed of an iron-based material, and
the motor shaft (12) is formed of a light metal-based material.

4. The actuator (10) according to claim 1,
wherein the speed reducer (18) includes an output member (44) that outputs rotation reduced by a reduction mechanism (30), and
the motor shaft (12) has a smaller specific gravity than the output member (44), and the output member (44) has a higher Young's modulus and a higher tensile strength higher than the motor shaft (12).

5. The actuator (10) according to claim 1,
wherein the connection member (46) is configured by a fastening member (78) that fastens the motor shaft (12) and the input shaft (16) in a radial direction.

6. The actuator (10) according to claim 1,
wherein one of the input shaft (16) and the motor shaft (12) includes an outer fitting portion (70), and
the other of the input shaft (16) and the motor shaft (12) includes an inner fitting portion (72) that is spigot-fitted with the outer fitting portion (70).

7. The actuator (10) according to claim 6,
wherein the connection member (46) is configured by a fastening member (78) that fastens the motor shaft (12) and the input shaft (16) in a radial direction, and
the fastening member (78) is configured by a stop screw that is screwed into a female screw portion (79) formed in the outer fitting portion (70).

8. The actuator (10) according to claim 6,
wherein the connection member (46) is configured by a fastening member (78) that fastens the motor shaft (12) and the input shaft (16) in a radial direction, and
the fastening member (78) is screwed into a female screw portion (79) formed in the inner fitting portion (72).

9. The actuator (10) according to claim 1,
wherein the motor shaft (12) includes a first maximum outer diameter portion (80) having a maximum outer diameter in the motor shaft (12),
the input shaft (16) includes a second maximum outer diameter portion (82) having a maximum outer diameter in the input shaft (16),
at least one of the motor shaft (12) and the input shaft (16) includes a disposition portion (86A, 86B) that is provided between the first maximum outer diameter portion (80) and the second maximum outer diameter portion (82) and in which an annular component (84A, 84B) is disposed, and
an outer diameter of the disposition portion (86A, 86B) is smaller than an outer diameter of each of the first maximum outer diameter portion (80) and the second maximum outer diameter portion (82).
